(19) Europäisches Patentamt
European Patent Office
Office européen des brevets

(11) **EP 2 479 232 A1**

(12) **EUROPEAN PATENT APPLICATION**
published in accordance with Art. 153(4) EPC

(43) Date of publication:
**25.07.2012 Bulletin 2012/30**

(21) Application number: **10817105.9**

(22) Date of filing: **09.09.2010**

(51) Int Cl.:
***C09J 175/06*** (2006.01)    ***C08G 18/12*** (2006.01)
***C09J 11/06*** (2006.01)

(86) International application number:
**PCT/JP2010/065565**

(87) International publication number:
**WO 2011/033992 (24.03.2011 Gazette 2011/12)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.09.2009 JP 2009212951**

(71) Applicant: **Asahi Glass Company, Limited Tokyo 100-8405 (JP)**

(72) Inventors:
• **NAKAMURA Makito**
**Tokyo 100-8405 (JP)**

• **SATO Hisashi**
**Tokyo 100-8405 (JP)**
• **ARAI Takeaki**
**Tokyo 100-8405 (JP)**

(74) Representative: **Müller-Boré & Partner Patentanwälte**
**Grafinger Straße 2**
**81671 München (DE)**

(54) **REACTIVE HOT-MELT ADHESIVE AGENT COMPOSITION**

(57) The present invention relates to a reactive hot-melt adhesive agent composition, containing an isocyanate group-terminated urethane prepolymer (P) obtained through a step of reacting a polyol (Z) with a polyisocyanate compound (C), in which the polyol (Z) contains a polyester ether polyol (A) and an aliphatic polyester polyol (B).

EP 2 479 232 A1

**Description**

Technical Field

The present invention relates to a reactive hot-melt adhesive agent composition which is a hot-melt one and is a moisture-curable one that reacts with moisture to achieve curing.

Background Art

Hitherto, there are known non-solvent type moisture-curable adhesive agents which contain as a main component an isocyanate group-terminated urethane prepolymer. As one kind of such type adhesive agents, a hot-melt moisture-curable adhesive agent (referred to as "reactive hot-melt adhesive agent" in the present Description) which is a paste or a solid at ordinary temperature and has the property of being melted upon heating is known. Here, curing means that a crosslinking reaction is advanced with moisture. In the present invention, the moisture-curable one is nothing but a moisture-crosslinking one.
The reactive hot-melt adhesive agent has a characteristic feature that strong adhesive force is developed through the following three stages: a first stage where an isocyanate group-terminated urethane prepolymer melted by heating is applied to base materials and the base materials are attached to each other; a second stage where the melted isocyanate group-terminated urethane prepolymer is cooled and solidified to develop such a degree of initial adhesive force that can fix the base materials to each other; and a third stage where the isocyanate group-terminated urethane prepolymer is moisture-cured.

The following Patent Document 1 describes a hot-melt adhesive agent containing a thermoplastic polyurethane obtained by reacting a polyol with a polyisocyanate compound to synthesize an isocyanate group-terminated prepolymer and thereafter reacting the isocyanate group-terminated prepolymer with a chain extending agent.
Moreover, as the polyol, a polyester ether diol obtained by copolymerizing polyoxypropylenediol, phthalic anhydride, and propylene oxide is disclosed (Production Examples 1 to 3).

Background Art Document

Patent Document

Patent Document 1: WO2008/149682

Summary of the Invention

Problems that the Invention is to Solve

In recent years, the use of the reactive hot-melt adhesive agent is investigated in bookbinding, building material fields, assembly of automobile parts, clothing uses, and the like, and it is required to exhibit higher adhesive force immediately after attachment for the purpose of shortening of working steps thereof.

The present invention is devised in consideration of the foregoing circumstances and an object thereof is to provide a reactive hot-melt adhesive agent composition being excellent in initial adhesive force, adhesive force after curing, and strength of the adhesive agent layer after curing.

Means for Solving the Problems

In order to solve the foregoing problem, the reactive hot-melt adhesive agent composition according to the present invention is a composition, containing an isocyanate group-terminated urethane prepolymer (P) obtained through a step of reacting a polyol (Z) with a polyisocyanate compound (C), in which the polyol (Z) contains a polyester ether polyol (A) and an aliphatic polyester polyol (B).

It is preferred that the polyester ether polyol (A) contains a polyester ether polyol (A1) obtained by copolymerizing a polycarboxylic anhydride (b) and an alkylene oxide (c) with an initiator (a).
Further, it is preferred that the polycarboxylic anhydride (b) is phthalic anhydride or maleic anhydride.
Moreover, it is preferred that the reaction of copolymerizing the polycarboxylic anhydride (b) and the alkylene oxide (c) with the initiator (a) is carried out in the presence of a composite metal cyanide complex catalyst (X).

A lubricant (Y) can be further contained.
Further, it is suited for clothing uses.

Advantage of the Invention

According to the present invention, a reactive hot-melt adhesive agent composition being excellent in initial adhesive force, adhesive force after curing, and strength of the adhesive agent layer after curing can be obtained.

Mode for Carrying Out the Invention

The reactive hot-melt adhesive agent composition (hereinafter sometimes simply referred to as "adhesive agent composition") of the present invention, contains an isocyanate group-terminated urethane prepolymer (P) (hereinafter sometimes simply referred to as "prepolymer (P)") which is obtained through a step of reacting a polyol (Z) with a polyisocyanate compound (C).

<Polyol (Z)>

The polyol (Z) contains a polyester ether polyol (A) (hereinafter sometimes simply referred to as "polyol (A)") and an aliphatic polyester polyol (B) (hereinafter sometimes simply referred to as "polyol (B)").

[Polyester ether polyol (A)]

The polyester ether polyol (A) is a compound having a random copolymer chain and/or a block copolymer chain formed from a divalent group having an ester bond and a divalent group having an ether bond; and having two or more hydroxyl groups present at the terminal thereof.
The polyol (A) preferably contains a polyester ether polyol (A1) (hereinafter sometimes simply referred to as "polyol (A1)") obtained by copolymerizing a polycarboxylic anhydride (b) and an alkylene oxide (c) with an initiator (a).
The polyol (A1) is preferably a diol.

[Initiator (a)]

The initiator (a) is sufficiently a compound having two or more active hydrogen atoms per molecule thereof. One having two active hydrogen atoms is preferred and examples thereof include polyether diols and dihydric alcohols. The polyether diol is a compound having a hydroxyl value converted molecular weight of 300 to 4,000 per hydroxyl group, which is obtained by adding an alkylene oxide to a divalent alcohol. In the case where a composite metal cyanide complex catalyst is used as a catalyst (X) at the production of the polyester ether polyol (A1) to be mentioned later, a polyether diol is preferably used as the initiator (a).
Examples of the dihydric alcohol include ethylene glycol, diethylene glycol, polyethylene glycols, propylene glycol, dipropylene glycol, and 1,4-butanediol. Of these, propylene glycol is preferred.
In the case where the polyester ether polyol (A1) is produced using the dihydric alcohol as the initiator (a), an excessive amount of alkylene oxide (c) which is more than the amount equivalent to the polycarboxylic anhydride (b) is used. When the alkylene oxide (c) is less than the above amount, since the terminal functional group of the polyester ether polyol becomes a carboxyl group having low reactivity with an isocyanate group, in the case where a reactive hot-melt adhesive agent is obtained by the reaction with a polyisocyanate compound, there is a problem that mechanical strength of the obtained reactive hot-melt adhesive agent becomes poor.
The hydroxyl value converted molecular weight of the initiator (a) per hydroxyl group is preferably 62 to 4,000, and more preferably 400 to 2,000. When the hydroxyl value converted molecular weight is 62 or more, flexibility of the adhesive agent layer (urethane resin layer) formed by curing the adhesive agent composition of the present invention is prone to be good. Moreover, when the hydroxyl value converted molecular weight is 4,000 or less, mechanical strength and adhesive force of the adhesive agent layer are easily improved.
The content of the constitutional unit derived from the initiator (a) in the polyester ether polyol (A1) is preferably 1 to 60% by mass, and more preferably 10 to 60% by mass. When the content is 1% by mass or more, the objective polyester ether polyol (A1) where the polycarboxylic anhydride and the alkylene oxide are copolymerized is easily obtained. Moreover, when the content is 60% by mass or less, the content of the polycarboxylic anhydride (b) in the polyester ether polyol (A1) can be increased, so that the mechanical properties and adhesive force of the adhesive agent layer are improved.

[Polycarboxylic anhydride (b)]

The polycarboxylic anhydride (b) is preferably a dicarboxylic anhydride. Examples thereof include phthalic anhydride, maleic anhydride, and succinic anhydride. Of these, phthalic anhydride and maleic anhydride are preferred because of high adhesiveness and low costs.

The content of the constitutional unit derived from the polycarboxylic anhydride (b) in the polyester ether polyol (A1) is preferably 10 to 50% by mass, and more preferably 15 to 40% by mass. When the content is 10% by mass or more, the adhesive force of the adhesive agent layer is prone to be good. When the content is 50% by mass or less, the flexibility of the adhesive agent layer is prone to be good.

[Alkylene oxide (c)]

The alkylene oxide (c) is preferably an alkylene oxide having 2 to 4 carbon atoms. Examples thereof include propylene oxide, 1,2-butylene oxide, 2,3-butylene oxide, and ethylene oxide. Only one kind of the alkylene oxide (c) may be used or two or more kinds thereof may be used in combination. As the alkylene oxide (c), it is preferred to use ethylene oxide or propylene oxide and it is more preferred to use propylene oxide alone.

As to the amount of the alkylene oxide (c) to be used, the molar ratio represented by alkylene oxide (c)/polycarboxylic anhydride (b) is preferably 50/50 to 95/5, and more preferably 50/50 to 80/20. Where the total of the alkylene oxide (c) and the polycarboxylic anhydride (b) is taken as 100% by mol, when the amount of the alkylene oxide (c) to be used is 50% by mol or more, the amount of the unreacted polycarboxylic anhydride (b) in the polyester ether polyol (A1) can be suppressed and the acid value of the polyester ether polyol (A1) can be lowered. Namely, by excessively adding alkylene oxide (c) to the polycarboxylic anhydride (b) to achieve a block addition reaction of the alkylene oxide (c) at the terminal, the acid value of the obtained polyester ether polyol (A1) can be reduced. Moreover, when the amount of the alkylene oxide (c) to be used is 95% by mol or less, the adhesive force of the adhesive agent layer is prone to be good.

[Polyester ether polyol (A1)]

In the copolymer chain (part where the polycarboxylic anhydride (b) and the alkylene oxide (c) are copolymerized) of the polyester ether polyol (A1), the polycarboxylic anhydride (b) and the alkylene oxide (c) alternatively undergo an addition reaction or the alkylene oxide (c) undergoes a block addition reaction. However, with regard to the polycarboxylic anhydride (b) and the alkylene oxide (c), since the polycarboxylic anhydride (b) is more reactive and the polycarboxylic anhydride (b) does not undergo the addition reaction successively, the alkylene oxide (c) block in the copolymer chain is relatively short such that the block is composed of several pieces of the constitutional unit derived from the alkylene oxide (c). Therefore, the total structure of the polyester ether polyol (A1) can be designed by controlling the molecular weight of the initiator (a) and the addition amount of the alkylene oxide (c) at the terminal part.

The polyester ether polyol (A1) preferably has the hydroxyl value converted molecular weight per hydroxyl group of 250 to 10,000, more preferably 350 to 10,000, and further preferably 700 to 5,000. When the hydroxyl value converted molecular weight per hydroxyl group is 250 or more, the mechanical properties and flexibility of the adhesive agent layer are improved and also the adhesive force to an adherend is improved. Moreover, when the hydroxyl value converted molecular weight per hydroxyl group is 10,000 or less, the mechanical properties of the adhesive agent layer is improved and the viscosity is easily lowered.

The hydroxyl value converted molecular weight of the polyester ether polyol (A1) can be easily controlled by appropriately adjusting the number of moles of the polycarboxylic anhydride (b) and alkylene oxide (c) to be copolymerized with the initiator (a).

The polyester ether polyol (A1) preferably has the average molecular weight (M') per copolymer chain of 100 to 3,000, and more preferably 200 to 2,000. The average molecular weight (M') per copolymer chain means average molecular weight per one copolymer chain formed by copolymerization of the polycarboxylic anhydride (b) and the alkylene oxide (c) and is a value obtained by subtracting the molecular weight of the initiator (a) from the hydroxyl value converted molecular weight and dividing the resulting molecular weight by the number of the functional groups of the initiator (a).

When the average molecular weight (M') per copolymer chain is 100 or more, the adhesiveness of the obtained adhesive agent layer is prone to be good. Moreover, when the average molecular weight (M') per copolymer chain is 3,000 or less, the viscosity of the obtained polyester ether polyol (A1) does not become exceedingly high. The average molecular weight (M') per copolymer chain can be easily controlled by appropriately adjusting the number of moles of the polycarboxylic anhydride (b) and alkylene oxide (c) to be copolymerized with the initiator (a), similarly to the hydroxyl value converted molecular weight.

The acid value of the polyester ether polyol (A1) is preferably 2.0 mg KOH/g or less, more preferably 1.0 mg KOH/g or less, and may be zero. When the acid value of the polyester ether polyol (A1) is 2.0 mg KOH/g or less, the reactivity with the polyisocyanate compound (C) is increased and also hydrolysis resistance of the adhesive agent layer is not deteriorated.

[Process for producing polyester ether polyol (A1)]

The polyester ether polyol (A1) can be produced by copolymerizing the polycarboxylic anhydride (b) and the alkylene oxide (c) with the initiator (a). The copolymerization reaction is preferably carried out using the catalyst (X) in order to enhance the reaction rate.

As the catalyst (X), a ring-opening addition polymerization catalyst is suitably used and examples thereof include alkali catalysts such as potassium hydroxide and cesium hydroxide; composite metal cyanide complex catalysts; and phosphazene catalysts. Of these, since the polyester ether polyol (A1) having a smaller value of Mw/Mn can be obtained, the composite metal cyanide complex catalysts are more preferred.

As the composite metal cyanide complex catalysts, those where an organic ligand is coordinated to a zinc hexacyanocobaltate complex are preferred. As the organic ligand, ethers such as ethylene glycol dimethyl ether and diethylene glycol dimethyl ether, and alcohols such as tert-butyl alcohol, are preferred.

The amount of the catalyst (X) to be used is preferably 0.0001 to 0.3% by mass, and more preferably 0.003 to 0.03% by mass, based on the mass of the polyester ether polyol (A1) that is a product. When the amount of the catalyst (X) to be used is 0.0001% by mass or more, the polymerization reaction tends to proceed sufficiently. Moreover, when the amount of the catalyst (X) to be used is 0.3% by mass or less, an adverse effect of the remaining catalyst tends to decrease.

As a process for producing the polyester ether polyol (A1), specifically, the following may be suitable. First, the initiator (a), the polycarboxylic anhydride (b) and the catalyst (X) are charged into a reaction vessel beforehand, and reaction is allowed to proceed while the alkylene oxide (c) is gradually added thereto. In the reaction, since the ring-opening reaction of the polycarboxylic anhydride (b) is faster than the ring-opening reaction of the alkylene oxide (c) and the polycarboxylic anhydride (b) does not undergo the addition reaction successively, the polyester ether polyol (A1) having a copolymer chain where the polycarboxylic anhydride (b) and the alkylene oxide (c) are alternatively added can be obtained.

[Aliphatic polyester polyol (B)]

The aliphatic polyester polyol (B) is a compound having a copolymer chain (polyester chain) composed of a linear divalent group having an ester bond, and having two or more hydroxyl groups present at the terminal thereof. The aliphatic polyester polyol (B) does not have an ether bond.

The aliphatic polyester polyol (B) is preferably difunctional one having two hydroxyl groups present at the terminal thereof. Namely, an aliphatic polyester diol obtained by a polycondensation reaction of an aliphatic dibasic acid with a diol compound is preferred.

Examples of the aliphatic dibasic acid include adipic acid, succinic acid, glutaric acid, pimellic acid, suberic acid, azelaic acid, sebacic acid, and dodecanedioic acid. Of these, sebacic acid and adipic acid are preferred in view of crystallinity and melt viscosity.

Examples of the diol compound include ethylene glycol, propylene glycol, 1,3-propanediol, 2-methyl-1,3-butanediol, 1,4-butanediol, neopentyl glycol, 1,5-pentanediol, 2-methyl-1,5-pentanediol, 3-methyl-1,5-pentanediol, 1,6-hexanediol, 2,2,4-trimethyl-1,6-hexanediol, 3,3,5-trimethyl-1,6-hexanediol, 2,3,5-trimethylpentanediol, 1,9-nonanediol, 2-methyl-1,8-octanediol, decanediol, and dodecanediol. They may be used alone or in combination of two or more thereof. Of these, 1,4-butanediol and/or 1,6-hexanesiol are preferred.

The hydroxyl value converted average molecular weight of the aliphatic polyester polyol (B) is preferably 500 to 5,000, and further preferably 1,000 to 4,000. When the hydroxyl value converted average molecular weight of the aliphatic polyester polyol (B) is 5,000 or less, the melt viscosity of the adhesive agent composition becomes moderately low and thus application, e.g., coating to a base material is prone to be easy. On the other hand, when the hydroxyl value converted average molecular weight is 500 or more, modulus of the adhesive agent layer after cuing can be maintained to be moderately low, so that there is a tendency that good texture is obtained when used for adhesion of textile products.

Incidentally, in the present Description, the hydroxyl value converted average molecular weight of a polyol means a value obtained by calculation using the following equation:

$$\text{Hydroxyl value converted average molecular weight}$$
$$= (56100/\text{hydroxyl value}) \times \text{average number of functional groups}$$

based on the hydroxyl value (mg KOH/g) of the polyol and the average number of the functional groups per one molecule of the polyol.

The average number of the functional groups per one molecule of the aliphatic polyester polyol (B) is, for example, 2 in the aliphatic polyester polyol (B) produced using only an aliphatic dicarboxylic acid and a diol as raw materials. Furthermore, in the case where a component other than difunctional component, such as a triol is used as a part of the raw material, the value may be other than 2, and the average number of the functional groups can be easily obtained by calculation based on the number of the functional groups and the amount (molar basis) of each raw material to be used.

[Other polyol]

The polyol (Z) may contain other polyol(s) which are not included in any categories of the polyester ether polyol (A) and the aliphatic polyester polyol (B). The other polyol is preferably a diol.
Examples of the other polyol include polyester ether polyols other than the polyester ether polyol (A); polyester polyols other than the aliphatic polyester polyol (B); polyoxyalkylene polyols each obtainable by ring-opening addition polymerization of an alkylene oxide using a compound in which the number of active hydrogen atoms per molecule is 2 or more, preferably 2 as an initiator; and polycarbonate diols.
The hydroxyl value converted molecular weight of the other polyol per hydroxyl group is preferably 250 to 10,000, more preferably 1,000 to 10,000, and further preferably 1,000 to 5,000.
The content ratio of the polyester ether polyol (A) to the aliphatic polyester polyol (B) contained in the polyol (Z) is preferably 5/95 to 70/30, and more preferably 15/85 to 60/40 as a mass ratio (A)/(B). When the polyester ether polyol (A) is too little, adhesiveness and flexibility tend to be poor, while when the aliphatic polyester polyol (B) is too little, a solidification rate tends to be low, so that the cases are not preferred. The content of the other polyol in the polyol (Z) is preferably 50% by mass or less, more preferably 30% by mass or less, and may be zero.

<Polyisocyanate compound (C)>

The polyisocyanate compound (C) is a compound having two or more isocyanate groups (-NCO). Examples thereof include aromatic diisocyanate compounds such as 4,4'-diphenylmethane diisocyanate (MDI), 2,4-tolylene diisocyanate, and 2,6-tolylene diisocyanate; aralkyl diisocyanate compounds such as xylylene diisocyanate and metatetramethylxylene diisocyanate; aliphatic diisocyanate compounds such as hexamethylene diisocyanate and 2,2,4-trimethylhexamethylene diisocyanate; alicyclic diisocyanate compounds such as isophorone diisocyanate and 4,4'-methylenebis (cyclohexyl isocyanate); and urethane-modified compounds obtained from the foregoing diisocyanate compounds.
Of these, in view of excellent reactivity with the polyol (Z) and easily obtainable good mechanical strength and adhesive force of the adhesive agent layer, aromatic diisocyanates and urethane-modified compounds thereof are preferred, and particularly, 4,4'-diphenylmethane diisocyanate, 2,4-tolylene diisocyanate, and 2,6-tolylene diisocyanate, and urethane-modified compounds thereof are preferred.
The polyisocyanate compound (C) may be used alone or in combination of two or more thereof.

<Isocyanate group-terminated urethane prepolymer (P)>

The prepolymer (P) is obtained through a step of reacting the polyol (Z) containing the polyester ether polyol (A) and the aliphatic polyester polyol (B) with the polyisocyanate compound (C). The reaction of the polyol (Z) with the polyisocyanate compound (C) can be carried out using a known procedure. For example, a method of reacting the polyol (Z) with the polyisocyanate compound (C) under heating at 60 to 100°C for 1 to 20 hours under a dry nitrogen stream, can be employed.
At the reaction of the polyol (Z) with the polyisocyanate compound (C), by adjusting the blend ratio so that the ratio (NCO index) of the number of moles of the isocyanate group of the polyisocyanate compound (C) to the number of moles of the hydroxyl group of the polyol (Z) becomes more than 1; that is, so that the isocyanate group becomes excessive, the prepolymer (P) having an isocyanate group at the terminal thereof can be obtained.
Also, the isocyanate group-terminated urethane prepolymer (P) according to the present invention includes a reaction product having an isocyanate group at the terminal thereof obtained by reacting the polyol (Z) with the polyisocyanate compound (C) in the same manner as mentioned above to obtain an intermediate product having an isocyanate group at the terminal thereof and further reacting a chain extending agent therewith.
The chain extending agent is a compound having two functional groups capable of reacting with an isocyanate group. The agent having a molecular weight of 500 or less is preferred and one having a molecular weight of 300 or less is more preferred. As the functional group, a hydroxyl group and a primary or secondary amino group are preferred.
At the reaction of the intermediate product having an isocyanate group at the terminal thereof with the chain extending agent, by adjusting the blend ratio so that the ratio (NCO index) of the number of moles of the isocyanate group to the number of moles of the functional group, which is capable of reacting with the isocyanate group, of the chain extending agent becomes more than 1, that is, so that the isocyanate group becomes excessive, the reaction product having an isocyanate group at the terminal thereof, i.e., the isocyanate group-terminated urethane prepolymer (P) can be obtained.

Examples of the chain extending agent include dihydric alcohols such as ethylene glycol, propylene glycol, 1,4-butanediol, 1,5-pentanediol, and 1,6-hexanediol; amino alcohols such as ethanolamine, aminopropyl alcohol, 3-aminocyclohexyl alcohol, and p-aminobenzyl alcohol; diamines such as ethylenediamine, 1,2-propylenediamine, 1,4-butylenediamine, 2,3-butylenediamine, hexamethylenediamine, cyclohexanediamine, piperazine, xylylenediamine, tolylenediamine, phenylenediamine, diphenylmethane diamine, and 3,3'-dichlorodiphenylmethanediamine; hydrazines such as hydrazine, monoalkylhydrazines, and 1,4-dihydrazinodiethylene; and dihydrazides such as carbohydrazide and adipohydrazide. Of these, dihydric alcohols are preferred. The chain extending agent may be used alone or in combination of two or more thereof.

For the reaction of the polyol (Z) with the polyisocyanate compound (C) or the reaction of the isocyanate group-terminated intermediate product with the chain extending agent, a known urethane-forming reaction catalyst can be used. Examples of the urethane-forming reaction catalyst include organotin compounds such as dibutyltin dilaurate, dioctyltin dilaurate, dibutyltin dioctoate, and tin 2-ethylhexanoate; iron compounds such as iron acetylacetonate and ferric chloride; and tertiary amine-based catalysts such as triethylamine and triethyldiamine. Of these, the organotin compounds are preferred.

The content of the isocyanate group (hereinafter sometimes abbreviated as NCO group) in the isocyanate group-terminated urethane prepolymer (P) of the present invention (NCO group content) is preferably 0.3 to 10% by mass, and more preferably 0.5 to 5% by mass.

When the NCO group content is equal to or more than the lower limit value of the above range, the mechanical strength and heat resistance after moisture curing tend to be excellent, while when the content is equal to or less than the upper limit value, foaming by the moisture curing tends to be little.

Incidentally, the measured value of the NCO group content of the prepolymer (P) in the present Description is a value obtained by the method described in JIS K7301 (1995).

The prepolymer (P) preferably has a melt viscosity of 200,000 mPa· s or less, and more preferably 10,000 mPa· s or less at 150°C. The lower limit value is preferably 1,000 mPa· s or more. When the melt viscosity is equal to or less than the upper limit value of the above range, wettability of the adhesive agent to a textile base material tends to be good at the time when the adhesive agent composition is melted under heating and is applied to the textile base material through coating or the like. Moreover, when the melt viscosity is equal to or more than the lower limit value of the above range, initial cohesive force tends to be high, so that the case is preferred.

The melt viscosity of the prepolymer (P) can be controlled by the molecular weight of each polyol contained in the polyol (Z), the blend ratio, and the NCO index in the reaction of obtaining the prepolymer (P).

Incidentally, the melt viscosity at 150°C in the present Description is a value measured by means of ICI Cone & plane viscometer manufactured by Research Equipment (London) Limited.

The cured product obtained by moisture curing of the prepolymer (P) preferably has a tensile strength at break of 15 MPa or more. There is no upper limit of the tensile strength at break of the cured product obtained by moisture curing of the prepolymer (P) in order to obtain the reactive hot-melt adhesive agent of the present invention, and 60 MPa or less is preferred as a practical tensile strength at break. Moreover, elongation at break is preferably 300% or more. There is no upper limit of the elongation at break of the cured product obtained by moisture curing of the prepolymer (P) in order to obtain the reactive hot-melt adhesive agent of the present invention, and 1100% or less is preferred as a practical elongation at break. By controlling the tensile strength at break to 15 MPa or more, the adhesive force at cohesive failure tends to be excellent, while by controlling the elongation at break to 300% or more, followability to an adherend tends to be excellent. Measurement methods thereof will be mentioned later.

<Reactive hot-melt adhesive agent composition>

The reactive hot-melt adhesive agent composition of the present invention contains the isocyanate group-terminated urethane prepolymer (P). The composition may be composed of only the isocyanate group-terminated urethane prepolymer (P). The adhesive agent composition may be in the form of a film, pellets, beads, and the like before use.

[Lubricant (Y)]

It is preferred to incorporate the lubricant (Y) into the reactive hot-melt adhesive agent composition. In the case where the reactive hot-melt adhesive agent composition is stored in the form of beads or pellets, blocking hardly occurs when the lubricant (Y) is incorporated.

As the lubricant (Y), a known compound or composition to be used as a lubricant in the urethane resin-based hot-melt adhesive agent can be appropriately used. Specific examples thereof include montanic acid esters, fatty acid amides, and polyethylene wax.

In the case where the lubricant (Y) is incorporated, the amount thereof to be added is preferably 0.1 to 3 parts by mass, and more preferably 0.5 to 1.5 parts by mass based on 100 parts by mass of the prepolymer (P).
When the amount of the lubricant (Y) to be added is smaller than the lower limit value of the above range, an effect of addition is not sufficiently obtained.
When the amount exceeds the upper limit value of the above range, there arise problems such as lowered adhesiveness and bleed-out of the lubricant, so that the case is not preferred.

[Additives]

Into the reactive hot-melt adhesive agent composition, known additives such as stabilizers and plasticizers other than the lubricant (Y) may be incorporated.
As the stabilizers, antioxidants, UV absorbers, light stabilizers, and the like may be mentioned. The amount of the stabilizers to be added is preferably 0.1 to 5 parts by mass based on 100 parts by mass of the prepolymer (P).
Moreover, although sufficient flexibility and adhesiveness can be both achieved without using any plasticizer in the present invention, the flexibility and the flowability at heating can be adjusted by incorporating the plasticizer into the adhesive agent composition in some cases. The amount of the plasticizer to be added is preferably 0 to 20 parts by mass based on 100 parts by mass of the adhesive agent composition. When the amount of the plasticizer to be added is 20 parts by mass or less, it is easy to suppress the decrease of adhesive force owing to bleeding of the plasticizer.
The adhesive agent composition of the present invention is used after heated and melted at use. For example, using an applicator for hot-melt adhesive agents, the melted adhesive agent composition may be applied to a base material. Alternatively, the film-shaped, pellet-shaped, or bead-shaped adhesive agent composition may be placed on the part of the base material to be adhered and heated and melted.
When the adherends (base materials) are attached to each other in the state where the adhesive agent composition is heated and melted and the whole is then cooled, the adhesive agent composition solidifies and the adherends (base materials) are fixed to each other. By further moisture curing, the adherends (base materials) are strongly adhered to each other through occurrence of a crosslinking reaction.
The isocyanate group-terminated urethane prepolymer (P) according to the present invention uses at least the polyester ether polyol (A) and the aliphatic polyester polyol (B) as the polyol (Z) to be reacted with the polyisocyanate compound (C). The reactive hot-melt adhesive agent composition according to the present invention containing the prepolymer (P) is excellent in initial adhesive force, adhesive force after curing, and strength of the adhesive agent layer after curing.
The reason for the above is not clear but it is considered that, by using a polyol obtained by copolymerizing a polycarboxylic anhydride and alkylene oxide with an initiator, the initial adhesiveness is improved by disturbing the crystallinity of the aliphatic polyester and, at the same time, the adhesive force after curing and the strength of the adhesive agent layer are also high since it has high cohesive force derived from the polycarboxylic anhydride ester.
Since the reactive hot-melt adhesive agent of the present invention has high elongation with maintaining the strength, the agent is suitable as an adhesive agent for clothing, sporting goods, shoes, and other uses where strength and elongation are required because deformation is imparted to the adhesive agent. Moreover, since it is possible to make the agent high elongation without adding any plasticizer, the agent is suitable as an adhesive agent for textile base materials that come to contact with human skin.

Examples

The following will specifically explain the present invention with reference to Examples. However, the present invention is not limited to the following Examples.

<Raw materials used>

The polyols used in the following examples as raw materials are as follows.

[Initiator (a)]

PPG-700 (abbreviation): polyoxypropylenediol having a hydroxyl value of 160.2 mg KOH/g and a hydroxyl value converted molecular weight of 700, which was produced using propylene glycol as an initiator and using a KOH catalyst.
PPG-2000 (abbreviation): polyoxypropylenediol having a hydroxyl value of 56.1 mg KOH/g and a hydroxyl value converted molecular weight of 2,000, which was produced using propylene glycol as an initiator and using a KOH catalyst.

[Aliphatic polyester polyol (B)]

PHA (abbreviation): poly(hexenediol) adipate diol having a hydroxyl value of 22.4 mg KOH/g and a hydroxyl value converted average molecular weight of 5,000, manufactured by Nippon Polyurethane Industry Co., Ltd., trade name: N-4018.
PHS (abbreviation): poly(hexenediol) sebacate diol having a hydroxyl value of 32.1 mg KOH/g and a hydroxyl value converted average molecular weight of 3,500, manufactured by Hokoku Corporation, trade name: URIC SE-3506.

[Polyester polyol having aromatic ring (Comparative Example)]

PHA/IP (abbreviation): poly(hexendiol) isophthalate diol/adipate diol having a hydroxyl value of 64.1 mg KOH/g and a hydroxyl value converted molecular weight of 1,750, manufactured by DIC corporation, trade name: TESLAC-2477.

[Production Example 1: Production of polyester ether polyol (A1-1)]

Into a pressure reactor equipped with a stirrer and a nitrogen inlet tube was charged 1435 g of PPG-700 that is a polyether polyol as an initiator (a). Then, 1214 g (8.2 mol) of phthalic anhydride was charged into the above reactor as a polycarboxylic anhydride (b), followed by stirring. Then, 8.0 g of a zinc hexacyanocobaltate-tert-butyl alcohol complex catalyst was charged as a catalyst (X) and reaction was carried out at 130°C under a nitrogen atmosphere for 7 hours with gradually adding 1452 g (25.0 mol) of propylene oxide as an alkylene oxide (c). Thereafter, after termination of decrease in the inner pressure of the reactor was confirmed, a product was taken out from the reactor to obtain a polyester ether polyol (A1-1) (hydroxyl value 56.3 mg KOH/g) where phthalic anhydride and propylene oxide were polymerized to the terminal of PPG-700 that is a polyether polyol. From results of $^1$H-NMR measurement, it was confirmed that the polyol (A1-1) had a polymer chain of phthalic anhydride and propylene oxide.
The hydroxyl value converted molecular weight of the polyol (A1-1) per hydroxyl group was 996, the average molecular weight (M') per copolymer chain was 646, and the acid value was 0.14 mg KOH/g.

[Production Example 2: Production of polyester ether polyol (A1-2)]

In the Production Example 1, the amount of PPG-700 charged was changed to 770 g, the polycarboxylic anhydride (b) was changed to 755 g (7.7 mol) of maleic anhydride, the amount of the zinc hexacyanocobaltate-tert-butyl alcohol complex catalyst charged was changed to 4.4 g, and the amount of propylene oxide added was changed to 675 g (11.6 mol). In the same manner as in Production Example 1 in other points, a polyester ether polyol (A1-2) (hydroxyl value 56.3 mg KOH/g) where maleic anhydride and propylene oxide were polymerized to the terminal of PPG-700 that is a polyether polyol, was obtained. From results of $^1$H-NMR measurement, it was confirmed that the polyol (A1-2) had a polymer chain of maleic anhydride and propylene oxide.
The hydroxyl value converted molecular weight of the polyol (A1-2) per hydroxyl group was 996, the average molecular weight (M') per copolymer chain was 646, and the acid value was 0.15 mg KOH/g.

[Example 1: Production of reactive hot-melt adhesive agent composition]

An isocyanate group-terminated prepolymer was synthesized with the composition shown in Table 1. In Table 1, the unit of the mixing amount is "part(s) by mass".
Namely, into a reaction vessel equipped with a stirrer and a nitrogen inlet tube, 50 g of the polyol (A1-1) obtained in Production Example 1 as a polyester ether polyol (A) and 50 g of PHS as an aliphatic polyester polyol (B) were charged and stirred to form a mixed polyol. Thereto was added 15.6 g of 4,4'-diphenylmethane diisocyanate (manufactured by Nippon Polyurethane Industry Co., Ltd., trade name: MILLIONATE MT, isocyanate group content: 33.6% by mass, hereinafter referred to as MDI) as a polyisocyanate compound (C), followed by reaction at 80°C under a nitrogen atmosphere for 4 hours. The NCO index represented by isocyanate group/hydroxyl group (molar ratio) was 1.50.
A part of the content after the reaction was taken out and the isocyanate group content was measured. After it was confirmed that the content was theoretically calculated content or less, the reaction was terminated. The product was taken out to obtain an isocyanate group-terminated prepolymer, which had an NCO group content of 1.50% by mass and a viscosity at 150°C of 3,200 (mPa· s). This was used as a reactive hot-melt adhesive agent composition.
When appearance of the mixed polyol was visually observed, separation did not occur and it was homogeneously mixed.
Also, with regard to appearance of the obtained adhesive agent composition, separation did not occur and it was homogeneous.

[Example 2: Production of reactive hot-melt adhesive agent composition]

An isocyanate group-terminated prepolymer, which had an NCO content and viscosity shown in Table 1, was obtained in the same manner as in Example 1 except that, in Example 1, the mixing amounts of (A) to (C) were changed as shown in Table 1. This was used as a reactive hot-melt adhesive agent composition. Incidentally, in Table 1, "> 10,000" in viscosity shows that the viscosity is larger than 10,000.

When appearance of the mixed polyol was visually observed, separation did not occur and it was homogeneously mixed. Also, with regard to appearance of the obtained adhesive agent composition, separation did not occur and it was homogeneous.

[Example 3: Production of reactive hot-melt adhesive agent composition]

An isocyanate group-terminated prepolymer, which had an NCO content and viscosity shown in Table 1, was obtained in the same manner as in Example 1 except that, in Example 1, the aliphatic polyester polyol (B) was changed to PHA and the mixing amounts of (A) to (C) were changed as shown in Table 1. This was used as a reactive hot-melt adhesive agent composition.

When appearance of the mixed polyol was visually observed, separation did not occur and it was homogeneously mixed. Also, with regard to appearance of the obtained adhesive agent composition, separation did not occur and it was homogeneous.

[Example 4: Production of reactive hot-melt adhesive agent composition]

An isocyanate group-terminated prepolymer, which had an NCO content and viscosity shown in Table 1, was obtained in the same manner as in Example 1 except that, in Example 1, the polyester ether polyol (A) was changed to the polyol (A1-2) obtained in Production Example 2 and the mixing amounts of (A) to (C) were changed as shown in Table 1. This was used as a reactive hot-melt adhesive agent composition.

When appearance of the mixed polyol was visually observed, separation did not occur and it was homogeneously mixed. Also, with regard to appearance of the obtained adhesive agent composition, separation did not occur and it was homogeneous.

[Example 5: Production of reactive hot-melt adhesive agent composition (containing lubricant)]

A reactive hot-melt adhesive agent composition was produced by adding 1 g of a lubricant to 100 g of the isocyanate group-terminated prepolymer obtained in the same manner as in Example 1. As the lubricant, a montanic acid ester-based lubricant (manufactured by Clariant Japan, trade name: LicolubWe4) was used.

When appearance of the obtained adhesive agent composition was visually observed, separation did not occur and it was homogeneous.

[Example 6: Production of reactive hot-melt adhesive agent composition (containing lubricant)]

A product obtained by adding 1 g of the same lubricant as in Example 5 to 100 g of the isocyanate group-terminated prepolymer obtained in the same manner as in Example 3 and kneading the resulting mixture, was used as a reactive hot-melt adhesive agent composition.

When appearance of the obtained adhesive agent composition was visually observed, separation did not occur and it was homogeneous.

[Comparative Example 1]

A reactive hot-melt adhesive agent composition was prepared using a polyether polyol having no ester bond instead of the polyester ether polyol (A).

Namely, an isocyanate group-terminated prepolymer, which had an NCO content and viscosity shown in Table 1, was obtained in the same manner as in Example 1 except that, in Example 1, 50 g of polyoxypropylenediol (PPG-2000) was used in place of 50 g of the polyester ether polyol (A1-1) obtained in Production Example 1. The NCO index was 1.50. This was used as a reactive hot-melt adhesive agent composition.

When appearance of the mixed polyol and the obtained adhesive agent composition was visually observed, separation did not occur and it was homogeneous.

[Comparative Example 2]

An isocyanate group-terminated prepolymer, which had an NCO content and viscosity shown in Table 1, was obtained in the same manner as in Example 2 except that, in Example 2, 20 parts by mass of polyoxypropylenediol (PPG-2000) was used in place of 20 parts by mass of the polyester ether polyol (A1-1). The NCO index was 1.50. This was used as a reactive hot-melt adhesive agent composition.
When appearance of the mixed polyol and the obtained adhesive agent composition was visually observed, separation did not occur and it was homogeneous.

[Comparative Example 3]

An isocyanate group-terminated prepolymer, which had an NCO content and viscosity shown in Table 1, was obtained in the same manner as in Example 3 except that, in Example 3, 50 parts by mass of polyoxypropylenediol (PPG-2000) was used in place of 50 parts by mass of the polyester ether polyol (A1-1). The NCO index was 1.50. This was used as a reactive hot-melt adhesive agent composition.
The mixed polyol was separated into two phases but, when appearance of the obtained adhesive agent composition was visually observed, separation did not occur and it was homogeneous.

[Comparative Example 4 (containing lubricant)]

A product obtained by adding 1 g of the same lubricant as in Example 5 to 100 g of the isocyanate group-terminated prepolymer obtained in Comparative Example 1 and kneading the resulting mixture, was used as a reactive hot-melt adhesive agent composition.
When appearance of the obtained adhesive agent composition was visually observed, separation did not occur and it was homogeneous.

[Comparative Example 5]

A reactive hot-melt adhesive agent composition was prepared using no polyester ether polyol (A) and using an isophthalic acid/adipic acid-based polyester polyol and a polyether polyol instead.
Namely, an isocyanate group-terminated prepolymer, which had an NCO content shown in Table 1, was obtained in the same manner as in Comparative Example 1 except that, in Comparative Example 1, the mixing amounts and kinds of (B), (C), and the other polyol were changed as shown in Table 1.
The mixed polyol was separated into two phases and the obtained adhesive agent composition was also separated into two phases. Therefore, viscosity measurement was not performed.

[Comparative Example 6]

A reactive hot-melt adhesive agent composition was prepared using no aliphatic polyester polyol (B) and using the polyester ether polyol (A) alone.
Namely, an isocyanate group-terminated prepolymer, which had an NCO content and viscosity shown in Table 1, was obtained in the same manner as in Example 1 from the polyester ether polyol (A1-1) obtained in Production Example 1 and MDI. The NCO index was 1.50. This was used as a reactive hot-melt adhesive agent composition.
[Table 1]

Table 1

| | | | Example 1 | Example 2 | Example 3 | Example 4 | Example 5 | Example 6 |
|---|---|---|---|---|---|---|---|---|
| Polyol (Z) | Polyester ether polyol (A) | A1-1 | 50 | 20 | 50 | | the same as in Example 1 | the same as in Example 3 |
| | | A1-2 | | | | 20 | | |
| | Aliphatic polyester polyol (B) | PHS | 50 | 80 | | 80 | | |
| | | PHA | | | 50 | | | |
| | Other polyol | PHA/IP | | | | | | |
| | | PPG-2000 | | | | | | |
| | Appearance of mixed polyol | | homogeneous | homogeneous | homogeneous | homogeneous | | |
| Polyisocyanate compound (C) | | MDI | 15.6 | 13.2 | 13.4 | 13.2 | | |
| Lubricant | | | | | | | 1.16 | 1.13 |
| NCO index | | | 1.50 | 1.50 | 1.50 | 1.50 | the same as in Example 1 | the same as in Example 3 |
| NCO group content in polymer (wt%) | | | 1.50 | 1.29 | 1.33 | 1.29 | | |
| Viscosity of prepolymer (mPa· s) (150°C) | | | 3,200 | > 10,000 | > 10,000 | > 10,000 | | |
| Appearance of adhesive agent composition | | | homogeneous | homogeneous | homogeneous | homogeneous | homogeneous | homogeneous |

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Polyol (Z) | Polyester ether polyol (A) | A1-1 | | | | the same as in Comparative Example 1 | | 100 |
| | | A1-2 | | | | | | |
| | Aliphatic polyester polyol (B) | PHS | 50 | 80 | | | 66 | |
| | | PHA | | | 50 | | | |
| | | | | | | | | |
| | Other polyol | PHA/IP | | | | | 20 | |
| | | PPG-2000 | 50 | 20 | 50 | | 14 | |
| | Appearance of mixed | polyol | homogeneous | homogeneous | separated | | separated | - |
| Polyisocyanate compound (C) | | MDI | 15.6 | 13.2 | 13.4 | | 14.5 | 18.8 |
| Lubricant | | | | | | 1.16 | | |
| NCO index | | | 1.50 | 1.50 | 1.50 | the same as in Comparative Example 1 | 1.50 | 1.50 |
| NCO group content in prepolymer (wt%) | | | 1.50 | 1.29 | 1.33 | | 1.42 | 1.77 |
| Viscosity of prepolymer (mPa· s) (150°C) | | | 2,200 | 6,800 | 4,200 | | - | 1,600 |
| Appearance of adhesive agent composition | | | homogeneous | homogeneous | homogeneous | homogeneous | separated | homogeneous |

14

<Evaluation>

For each of the reactive hot-melt adhesive agent compositions obtained in the above Examples 1 to 6 and Comparative Examples 1 to 4 and Comparative Example 6, evaluation was performed by the following methods. Since a homogeneous adhesive agent composition was not obtained in Comparative Example 5, evaluation was not performed.

[Physical properties of cured product (film)]

The reactive hot-melt adhesive agent compositions obtained in the above Examples and Comparative Examples were formed into film-shape and physical properties of the obtained films were measured. By the physical properties of the films, physical properties of the adhesive agent layers composed of the reactive hot-melt adhesive agent compositions can be evaluated.
The film-shaped formed product of the reactive hot-melt adhesive agent composition was prepared by the following method.
First, the reactive hot-melt adhesive agent composition was heated to 80°C and melted. Subsequently, a biaxially oriented polypropylene film (OPP film) was placed on a hot plate heated to 180°C. Then, the above melted reactive hot-melt adhesive agent composition was applied on the OPP film by means of an applicator so that the film thickness became 250 $\mu$m.
The thus obtained OPP film on which the reactive hot-melt adhesive agent composition had been applied was aged under conditions of 20°C and a relative humidity of 60% for 1 week to achieve moisture curing.
The thus obtained film-shaped formed product of the reactive hot-melt adhesive agent composition was cut into a prescribed shape by a dumbbell cutter and peeled from the OPP film to obtain a test piece having a prescribed shape. Using the test piece, each physical property of tensile modulus at an elongation of 100% (100% modulus, unit: MPa), tensile modulus at an elongation of 300% (300% modulus, unit: MPa), tensile strength at break (Ts, unit: MPa), and elongation at break (E, unit: %) were measured.
Conditions for the physical property measurement were in accordance with JIS-K7311 (1995) and the measurement was performed using a tensile tester as a measuring instrument and using dumbbell No. 3 as a test piece under a condition of a tension rate of 200 mm/minute. Temperature at the measurement was 23°C. Results of the measurement are shown in Table 2.

[Table 3]

Table 2

| | Unit | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 6 |
|---|---|---|---|---|---|---|---|---|---|---|---|---|
| Physical properties of film | | | | | | | | | | | | |
| 100% Modulus | MPa | 4.8 | 8.5 | 4.6 | 12.1 | 5.3 | 8.7 | 4.7 | 8.1 | 3.9 | 4.7 | 1.1 |
| 300% Modulus | MPa | 4.9 | 8.6 | 4.9 | 12.5 | 5.4 | 8.6 | 4.7 | 8.4 | 3.9 | 4.7 | 1.8 |
| Tensile strength at break Ts | MPa | 29.2 | 32.9 | 41.3 | 29.2 | 27.7 | 31.0 | 11.7 | 28.3 | 12.7 | 10.1 | 14.7 |
| Elongation at break | % | 920 | 790 | 830 | 730 | 780 | 750 | 1,130 | 900 | 1,020 | 890 | 860 |

[Adhesiveness test for short period of time]

Adhesiveness test for a short period of time of the reactive hot-melt adhesive agent compositions was performed by the following method.

(Preparation of test sample)

The reactive hot-melt adhesive agent compositions obtained in the above Examples and Comparative Examples were heated to 80°C and melted and were applied on a kraft paper having a thickness of 170 $\mu$m in a band shape having a width of about 3 mm and a thickness of about 50 mm by means of a disposable syringe having a volume of 2 ml. The same kraft paper was placed thereon and a rubber roll of 2 kg was reciprocated once to attach them by pressure, thereby obtaining a test sample where two sheets of the craft paper were overlaid through the adhesive agent composition layer.

(Evaluation)

The test sample was peeled off by hand after 10 seconds, 30 seconds, 1 minute, 2 minutes, 3 minutes, 4 minutes, and 10 minutes from the time immediately after the attachment by pressure and the destruction state was visually observed. The sample was evaluated as A in the case where material failure occurred, as B in the case where interfacial failure occurred, and as C in the case where cohesive failure occurred. Results of the measurement are shown in Table 3.

[Adhesiveness test to aluminum]

An adhesiveness test was performed using an aluminum foil as a base material (adherend).

(Preparation of test sample)

The film-shaped formed product of the reactive hot-melt adhesive agent composition was prepared by the following method.

First, the reactive hot-melt adhesive agent composition was heated to 80°C and melted. Subsequently, a biaxially oriented polypropylene film (OPP film) was placed on a hot plate heated to 180°C. Then, the above melted reactive hot-melt adhesive agent composition was applied on the OPP film by means of an applicator so that the film thickness became 150 $\mu$m.

The thus obtained OPP film on which the reactive hot-melt adhesive agent composition had been applied was cooled at room temperature for 30 minutes. The solidified product of the reactive hot-melt adhesive agent composition obtained was peeled from the OPP film to form a film-shaped reactive hot-melt adhesive agent composition (adhesive agent film). At one edge part of an aluminum foil having a width of 25 mm, a length of 100 mm, and a thickness of 130 $\mu$rn, on the surface of a mirror surface side out of the both surfaces, the above-obtained adhesive agent film cut into a size having a width of 25 mm and a length of 25 mm was placed. Thereon, the same aluminum foil was overlaid so that the face of a mirror surface side came into contact with the adhesive agent film, was lightly pressed by hand, and was further attached under heating by pressure of 0.5 MPa at 80°C for 10 seconds by means of a hot pressing machine.

A sample after 10 minutes from the attachment by pressure under heating and a sample which was further aged under conditions of 23°C and a relative humidity of 50% for 1 week to achieve curing were taken as test samples for adhesive force after 10 minutes and adhesive force after 1 week, respectively.

(Peeling test)

For each test sample obtained above, peel strength (unit: N/25 mm) was measured under conditions of a peel rate of 300 mm/min and a measurement temperature of 23°C by means of a tensile tester (manufactured by A & D Company Ltd., Product name:

TENSILON UNIVERSAL MATERIAL TESTING INSTRUMENT RTG-1210-PL).

Results thereof are shown in Table 3.

[Table 4]

Table 3

| | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 6 |
|---|---|---|---|---|---|---|---|---|---|---|---|
| Adhesiveness test for short period of time | | | | | | | | | | | |
| 10 seconds | C | A | C | B | A | C | C | C | C | B | C |
| 30 seconds | C | A | C | B | A | C | C | C | C | B | C |
| 1 minute | C | A | C | A | A | A | B | B | C | B | C |
| 2 minutes | C | A | C | A | A | A | B | B | B | B | C |
| 3 minutes | A | A | C | A | A | A | B | B | B | B | C |
| 4 minutes | A | A | C | A | A | A | B | B | B | B | C |
| 10 minutes | A | A | A | A | A | A | B | B | B | B | C |
| Adhesiveness test to aluminum base material | | | | | | | | | | | |
| Adhesive force after 10 minutes (N/25 mm) | 19.0 | 12.3 | 10.4 | 4.7 | 20.2 | 10.1 | 6.4 | 5.2 | 3.6 | 4.6 | unsolidified |
| Adhesive force after 1 week (N/25 mm) | 34.9 | 24.0 | 31.1 | 47.9 | 19.8 | 22.0 | 14.5 | 13.2 | 14.4 | 22.1 | - |

As shown in Table 1, good homogeneity was achieved in the mixed polyols and the adhesive agent compositions in Examples 1 to 6 where the polyester ether polyol (A) and the aliphatic polyester polyol (B) were used as the polyol (Z). On the other hand, in Comparative Example 3 where poly(hexenediol) adipate diol that is an aliphatic polyester polyol (B) and polyoxypropylenediol that is the other polyol were used as a mixture of 50 parts by mass each, phase separation occurred in the mixed polyol. The reason why the adhesive agent composition of this Comparative Example 3 was homogeneous is considered that a component, which was formed from the reaction with MDI and has both segments derived from the poly(hexenediol) adipate diol and the polyoxypropylenediol, contributed to compatibilization of a component composed of the poly(hexenediol) adipate diol alone and a component composed of the polyoxypropylenediol alone.

Moreover, in Comparative Example 5, it is considered that phase separation occurred in both of the mixed polyol and the adhesive agent composition since poly(hexenediol) sebacate diol and polyoxypropylenediol and [poly(hexenediol) isophthalate diol/adipate diol] were not compatibilized and also a component formed by the reaction with MDI did not contribute to compatibilization.

Although the polyester ether polyol (A) was not used in Comparative Examples 1 and 2, it is considered that good homogeneity was achieved in the mixed polyol and the adhesive agent composition since the polarity of poly(hexenediol) sebacate diol is low as compared with poly(hexenediol) diol.

As shown in Table 2, when Example 1 is compared with Comparative Example 1, Examples 2 and 4 are compared with Comparative Example 2, Example 3 is compared with Comparative Example 3, and Example 5 is compared with Comparative Example 4, it is realized that, in the case where the polyester ether polyol (A) and the aliphatic polyester polyol (B) are used in combination, elongation at break is slightly lowered but tensile strength at break is improved, tensile modulus (modulus) becomes almost equal to and strength of the adhesive agent layer (resin strength) after curing becomes good, as compared with the case where the polyol (B) is combined with the polyether polyol having no ester group (the other polyol).

The value of the modulus is higher in Example 4 where the polyester ether polyol (A1-2) was used than the value in Example 2 where the polyester ether polyol (A1-1) was used.

In Example 6 where a lubricant was added to the composition of Example 3, the value of the modulus became high but strength at break and elongation at break were both slightly lowered as compared with Example 3 but all of them were within good ranges.

Moreover, in Comparative Example 6 where the aliphatic polyester polyol was not used, tensile strength at break was low.

As shown in Table 3, in the adhesive agent compositions of Example 1 to 6, good adhesive force was obtained after 10 minutes from the attachment as compared with Comparative Examples 1 to 4, and adhesive force after 1 week was also high as compared with Comparative Example 1 to 3. Namely, it is realized that initial adhesive force and adhesive force after curing are good.

Moreover, in Comparative Example 6, no solidification was observed after 10 minutes from the attachment.

While the present invention has been described in detail and with reference to specific embodiments thereof, it will be apparent to one skilled in the art that various changes and modifications can be made therein without departing from the spirit and scope thereof.

The present application is based on Japanese Patent Application No. 2009-212951 filed on September 15, 2009, and the contents thereof are incorporated herein by reference.

## Claims

1. A reactive hot-melt adhesive agent composition, comprising an isocyanate group-terminated urethane prepolymer (P) obtained through a step of reacting a polyol (Z) with a polyisocyanate compound (C),
   wherein the polyol (Z) contains a polyester ether polyol (A) and an aliphatic polyester polyol (B).

2. The reactive hot-melt adhesive agent composition according to claim 1,
   wherein the polyester ether polyol (A) contains a polyester ether polyol (A1) obtained by copolymerizing a polycarboxylic anhydride (b) and an alkylene oxide (c) with an initiator (a).

3. The reactive hot-melt adhesive agent composition according to claim 2,
   wherein the polycarboxylic anhydride (b) is phthalic anhydride or maleic anhydride.

4. The reactive hot-melt adhesive agent composition according to claim 2 or 3, wherein the reaction of copolymerizing the polycarboxylic anhydride (b) and the alkylene oxide (c) with the initiator (a) is carried out in the presence of a composite metal cyanide complex catalyst (X).

**5.** The reactive hot-melt adhesive agent composition according to any one of claims 1 to 4, which further contains a lubricant (Y).

**6.** The reactive hot-melt adhesive agent composition according to any one of claims 1 to 5, which is for clothing uses.

**INTERNATIONAL SEARCH REPORT**

| International application No. |
| --- |
| PCT/JP2010/065565 |

A. CLASSIFICATION OF SUBJECT MATTER
*C09J175/06*(2006.01)i, *C08G18/12*(2006.01)i, *C09J11/06*(2006.01)i

According to International Patent Classification (IPC) or to both national classification and IPC

B. FIELDS SEARCHED

Minimum documentation searched (classification system followed by classification symbols)
C09J175/06, C08G18/12, C09J11/06

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2008/149682 A1 (Asahi Glass Co., Ltd.), 11 December 2008 (11.12.2008), claims; paragraphs [0014] to [0038] & US 2010/0087593 A1 & EP 2154168 A1 & CN 101679593 A & KR 10-2010-0017228 A | 1-6 |
| A | JP 3-72525 A (Asahi Glass Co., Ltd.), 27 March 1991 (27.03.1991), claims; page 6, upper right column, line 3 to lower left column, line 7 & US 5145883 A & EP 428737 A1 & WO 1990/013588 A1 | 1-6 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 October, 2010 (08.10.10) | 19 October, 2010 (19.10.10) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/065565 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-161991 A  (Dainippon Ink And Chemicals, Inc.), 28 June 2007 (28.06.2007), claim 1; paragraphs [0038] to [0053] (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008149682 A

- JP 2009212951 A